# EUROPEAN PATENT SPECIFICATION

(11) **EP 3 504 428 B1**
(45) Date of publication and mention of the grant of the patent: **09.12.2026**
(21) Application number: 17783779.6
(22) Date of filing: 27.09.2017
(51) Int. Cl.: F03D 80/00, F03D 80/40, F03D 80/50

(54) **PROTECTIVE COVER SYSTEM FOR PROTECTING A LEADING EDGE OF A WIND TURBINE ROTOR BLADE**
SCHUTZABDECKUNGSSYSTEM ZUM SCHUTZ EINER VORDERKANTE EINER WINDTURBINENROTORSCHAUFEL
SYSTÈME DE COUVERTURE POUR PROTÉGER UN BORD D'ATTAQUE D'UNE PALE DE ROTOR D'ÉOLIENNE

(30) Priority: 27.09.2016 EP 16190923
(43) Date of publication of application: 03.07.2019
(73) Proprietor: Siemens Gamesa Renewable Energy A/S, 7330 Brande (DK)
(72) Inventor: KRATMANN, Kasper Koops, 8700 Horsens (DK); NIELSEN, John, 9460 Brovst (DK)
(74) Representative: SGRE-Association
(86) International application number: PCT/EP2017/074566
(87) International publication number: WO 2018/060297

(56) References cited:
- EP-A1- 2 868 920
- US-A1- 2007 036 659
- US-A1- 2014 186 188

## Description

The invention relates to a protective cover system for protecting a leading edge of a wind turbine rotor blade from erosion, to a wind turbine rotor blade comprising such a protective cover system, and to a method for mounting such a protective cover system to a wind turbine rotor blade.

Nowadays rotor or turbine blades e.g. blades for wind, gas or steam turbines are made of fibre reinforced plastic composite materials. Erosion of the leading edge of such blades is known to occur in operation. Erosion of the leading edge of a turbine blade may reduce the efficiency of the blade and thus the power output by the turbine.

Wind turbine rotor blades, and in particular those of offshore wind turbines, are specially affected by wear which occurs where interacting with particles or droplets result in degrading of their leading edge. Erosion of the leading edge of wind turbine blades by droplet impingement wear may reduce the blade aerodynamic efficiency and thus the maximum output power of the wind turbine.

Erosion on a turbine blade may penetrate into the structural fibre reinforced laminate leading to severe failure of the turbine blade requiring repair which can prove very costly to turbine operators. This holds especially true for offshore wind turbines because their maintenance costs are extremely high.

This is why generally a surface system is foreseen on the leading edge of a wind turbine blade.

Repair procedures typically include a re-establishment of the surface systems mostly comprising filler and paint. In case of severe degradation, a lamination may be required. Different solutions are used for protecting and/or repairing leading edges of composite blades, including adhesive plastic tapes.

EP2497943 A1 discloses a wind turbine blade with an improved surface, wherein a plastic tape is arranged at specific locations of the blade to reinforce the blade surface.

The lift time of erosion protection tapes will last approximately between 5 - 8 years, depending on the environmental conditions of the location of the wind turbine, as well as the turbine operating conditions. In general, an erosion protection tape will rupture due to heavy erosion, causing the layer left on the rotor blade to freely flutter in the wind. This fluttering will result in a loss of aerodynamic performance of the blade, as well as in the generation of additional aerodynamic noise.

Other solutions suggest erosion protection coatings applied by brush, roller, spatula or spray can. Generally, such coatings have to be applied at a certain humidity level and within a special temperature window, e.g. 20 and 25 degree Celsius. Thus, these solutions may not be used in the field, e.g. at offshore wind farms.

Further solutions suggest attaching a protective cap made of a polymer material to the forefront of a wind turbine blade during manufacturing of the blade. One drawback of these solutions is that due to the length of the protective cap needed for a larger wind turbine blade, the mounting of such a protective cap in the field is impossible or at least very difficult, especially offshore. The transport and mounting of such protective caps are extremely cost intensive.

Documents considered during the patent prosecution are i.a.: EP 2 868 920 A1 and US 2007/036659 A1.

It is an object of the present invention to overcome the aforementioned drawbacks. A further object of the present invention is to provide a solution which allows for significantly reducing the required maintenance of the wind turbine and thus for reducing the maintenance costs compared to known protective solutions.

These objects are solved by the features of the independent claims. Further advantageous developments are subject of the dependent claims.

The invention relates to a protective cover system for protecting a leading edge of a wind turbine rotor blade from erosion comprising a first protective cover and a second protective cover. The first protective cover and the second protective cover comprise a polymer material. Both protective covers are pre-formed into a curved shape so as to accommodate at least a part of a wind turbine blade. Each of the first and second protective covers has a tip end and a root end.

The first protective cover comprises a first overlap portion at the root end and the second protective cover comprises a second overlap portion at the tip end.

The shape of the first overlap portion at the root end of the first protective cover is substantially complementary to the shape of the second overlap portion at the tip end of the second protective cover such that when overlapping these first and second overlap portions, the resulting cross section of the overlapped overlap portions substantially corresponds to the cross sections of at least one of the first and second protective covers outside the overlap portions.

The resulting cross section of the overlapped overlap portions has and ensures a substantially continuous development of the cross section throughout the first and second protective covers. As a result thereof, the aerodynamic properties of a wind turbine blade comprising this arrangement correspond substantially to those comprising a single protective cover with a continuous cross section development between its tip and root ends.

Smooth transitions between the first and the second protective cover are achieved when the protective cover system is mounted on a leading edge of a blade.

An advantage thereof is that the protective cover system does not peel off and erosion of the blade may not arise or is extremely limited where the protective covers overlap.

Advantageously, the protective cover system according to the present invention when mounted to a wind turbine blade avoids replenishing the leading edge protection of the wind turbine blade repeatedly during the operational life of the blade. Tests have shown that the protective cover system according to the invention may last on a wind turbine blade a lifetime of the blade.

In contrast to other erosion protection shields, like tapes or coatings, a protective cover of the protective cover system according to the present invention do not only adapt to a curved shape of a leading edge of a blade when attached to the blade but it has the curved shape already before being mounted to a curved surface. Thus, the handling of the protective covers during repair or manufacturing of blades is easier than the handling of other erosion protective elements or shields like tapes or coatings. In addition, a tape could have the same Youngs Modulus, but not the same elongation at break as a protective cover according to the present invention.

The shapes of the first and the second overlap portions are substantially complementary such that the protective cover system has a substantially closed surface even if the overlap portions do not engage with each other but only touch each other. Thus, in case the first and the second protective covers are disposed next to one another and their overlap portions are disposed one on top of the other but not as close as possible, a very little recess will arise on the surface of the protective cover system. However, due to the substantially complementary shapes of the overlap portions, the protective cover system has no interruption and will still protect the blade underneath.

In an embodiment of the invention, the first overlap portion tapers at least partly towards the root end of the first protective cover and the second overlap portion tapers at least partly towards the tip end of the second protective cover. Such a tapered overlap portion will easier forgive any mounting variances.

In a further embodiment of the invention, each of the first overlap portion and the second overlap portion comprises at least one step.

In yet a further embodiment of the invention, the step is at least partly rounded.

According to another embodiment of the invention, one of the first and second protective covers comprises a protruding element in the respective first or second overlap portion and the other one of the first and second protective covers comprises a recess in the other respective first or second overlap portion, wherein the recess is arranged to accommodate the protruding element. Allows for guiding the covers when being mounted.

According to another embodiment of the invention, the recess may be a hole and the protruding element may be nipple-shaped.

According to a further embodiment of the invention, at least one of the protective covers comprise an Elastomer, e.g. comprising Polyurethane or Polyethylene, preferably a Polyurethane based Elastomer.

Each of the first and second protective covers comprises four corners. At least one of these corners may be rounded. A rounded corner prevents the corner of the respective protective cover from peeling off.

According to yet a further embodiment of the invention, the first and second protective covers are pre-formed into a curved shape in a lateral direction and extend from their tip end to their root end in a longitudinal direction, wherein at least one of the first and second protective covers has a centerline running in the longitudinal direction, and this centerline is curved such that the first and second protective covers have a sagitta height.

According to another embodiment of the invention, the first and second protective covers are pre-formed into a curved shape in a lateral direction and extend from their tip end to their root end in a longitudinal direction, wherein each of the first and second protective covers has a centreline running in the longitudinal direction, and a first outer edge and a second outer edge, both running in parallel to the centerline.

The first and second protective covers have a thickness along their centerline which tapers off towards the respective first and second outer edges. Avoiding peeling off of covers.

According to a further embodiment of the invention, the first and second protective covers are pre-formed into a curved shape in a lateral direction and extend from their tip end to their root end in a longitudinal direction, wherein at least one of the first and second protective covers is curved in the longitudinal direction and/or tapers in the longitudinal direction, preferably towards its tip end. Advantage: This avoids that the protective covers wrinkle when mounted to a blade. The tapering also avoids peel-off of the protective cover and provides for a continous transition between the protective covers.

According to another embodiment of the invention, a length of at least one of the first and second protective cover amounts to about 2000 mm at maximum, preferably to about 1000 mm. An advantage thereof is that workers may work with these covers when repairing a blade in the field. A worker may reposition himself. So, this is a good length in view of operational window when working at a wind turbine blade in the field. According to a further embodiment of the invention, at least one of the first and second protective cover comprises a printed centerline on its outer surface to facilitate the mounting onto a leading edge of a wind turbine blade. This facilitates the alignment of shells and enables a quality check by optical means as well as allows for documenting quality-related information, e.g. photographs.

The wind turbine blade according to the present invention comprises a protective cover system which is connected to the wind turbine blade along a leading edge of the blade. An advantage thereof is that less repair work is needed and the maintenance costs are reduced. In addition, a combination with a de-icing or LPS is possible because of the electrical insulation property of the covers.

The method for mounting a protective cover system according to the present invention comprises the steps of:
- Providing a wind turbine blade, the protective cover system according to one of claims 1-12 and an adhesive;
- Applying the adhesive on the wind turbine blade and/or on an inner surface of the first and the second protective covers;
- Placing the first protective cover onto the wind turbine blade; and
- Placing the second protective cover onto the wind turbine blade, wherein the first and the second overlap portions of the protective covers are arranged such that the first and the second overlap portions overlap;
- Optionally, applying further adhesive between the first and the second overlap portions; and
- Allowing the adhesive to firmly connect the first and the second protective covers to the wind turbine blade.

Fig. 1 shows a wind turbine (prior art)
Fig. 2 shows a plan view of a wind turbine blade (prior art)
Fig. 3 shows the profile of a wind turbine blade together with the protective cover system according to the invention
Fig. 4 shows a cross-sectional view of a protective cover according to the invention

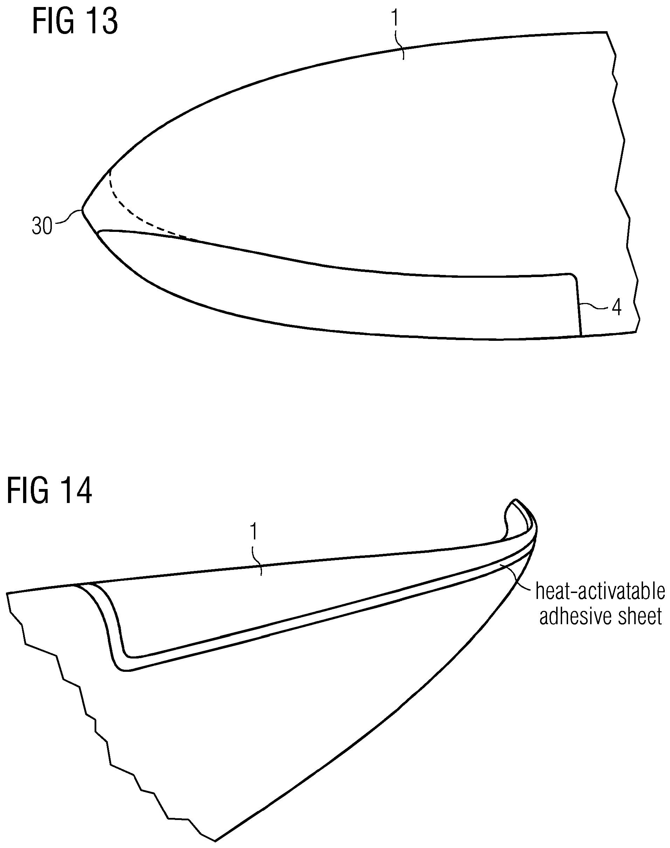

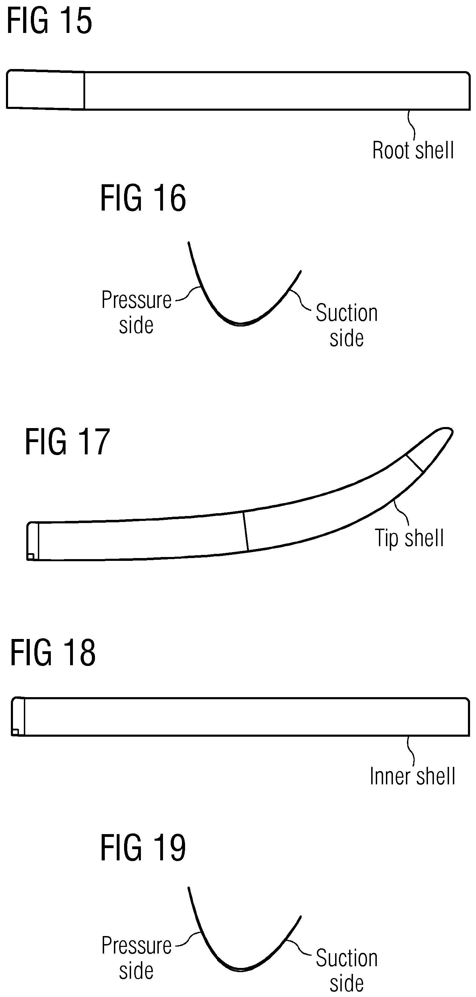

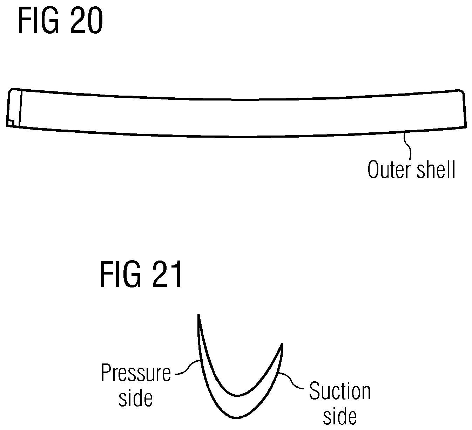

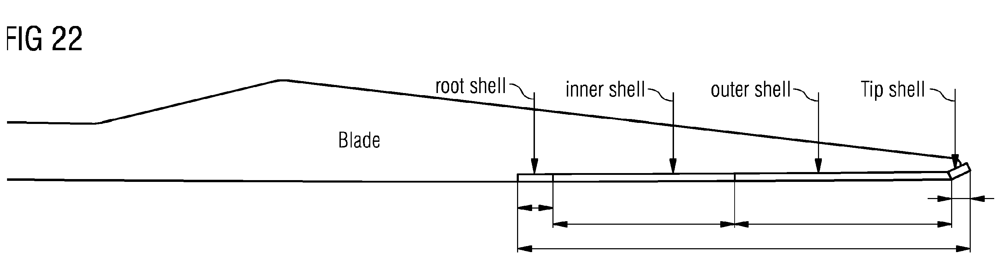

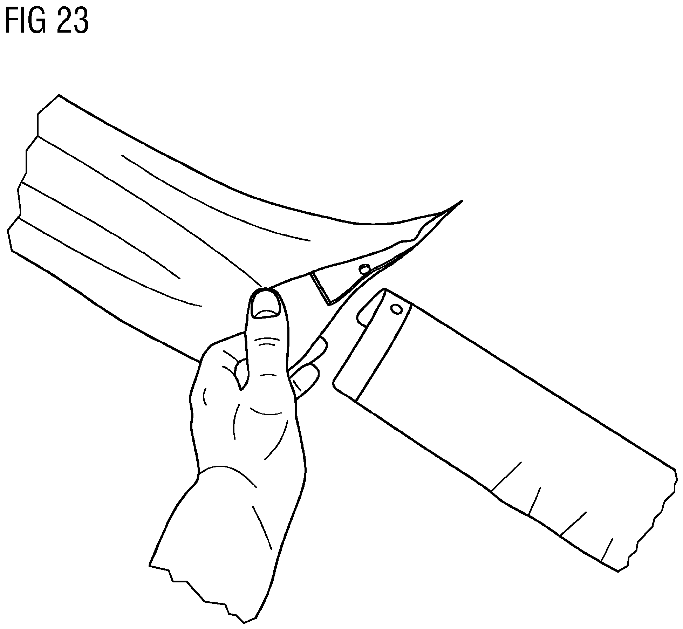

Fig. 5 to 22 showing further embodiments of the invention. Fig. 23 shows how flexible the protective covers 1 and 2 may be

A "wind turbine rotor blade" may also be referred to as "wind turbine blade". A "protective cover" for protecting a leading edge of a wind turbine blade from erosion may also be referred to as "shell" or "shield".

The "protective cover" according to the present invention is preformed. The protective cover is brought into a curved shape before being mounted. It may be machined. Preferably, it is pre-casted. The term "preformed" may also be referred to as pre-shaped. According to the present invention, the "protective cover" is pre-shaped into a curved shape so as to accommodate at least a part of a wind turbine blade (55). The "curved shape" referred to in claim 1 may also be described as a channel-like shape or as a substantially parabolic channel.

It is known in the art to cast a male part on the blade by use of a male mould. The resulting bond may be of superior quality. In contrast to this concept, a female mould may be used in addition to the male mould to pre-cast the first and second protective covers (1, 2) instead of casting over the blade (55) with one or more protective covers (1, 2).

Covers of an Elastomeric Polyurethane are preferred. This may be a rubbery, elastic and flexible material to allow the protective shell to be easily form-fitted to a wind turbine blade surface and to provide it with sufficient elasticity so as to dampen the impact of erosive influences.

The protective cover may be flexible. In other words, it may have some flexibility. That means the protective cover may be flexible in such a way that it is less flexible than a tape but more flexible than a stiff component. The advantage of a preformed but flexible protective cover is on the one hand a curved shape which facilitates handling of the cover and provides for a good fit to a curved surface, and on the other hand the fact that the protective cover may easily adapt to a range of differently curved surfaces, e.g. at different locations along a leading edge of a wind turbine blade. In other words, a preformed and flexible protective cover, e.g. made of a Polyurethane based Elastomer, may adapt to different curved surfaces having a range of different bending rates (angle) in a predetermined range of bending rates.

In order to keep the protective covers (1, 2) on the blade 55 even after being struck by a relatively large foreign object, such as a bird or an ice fragment, without a protective cover (1, 2) peeling off, the protective cover system (10) is bonded to the blade (55), e.g. by means of a heatactivatable adhesive. In so doing, the adhesive may be heated, e.g. by a heating blanket or a vacuum heating blanket.

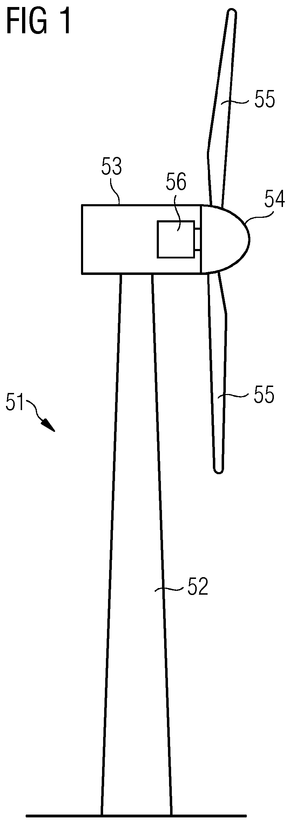

Fig. 1 shows a typical wind turbine (51) comprising a tower (52), a nacelle (53), a generator (56), and blades (55). The blades (55) are attached to a hub (54). They capture the energy of the wind, spinning a generator (56) in the nacelle (53). The tower (52) comprises the electrical conduits, supports the nacelle (53), and provides access to the nacelle (53) for maintenance.

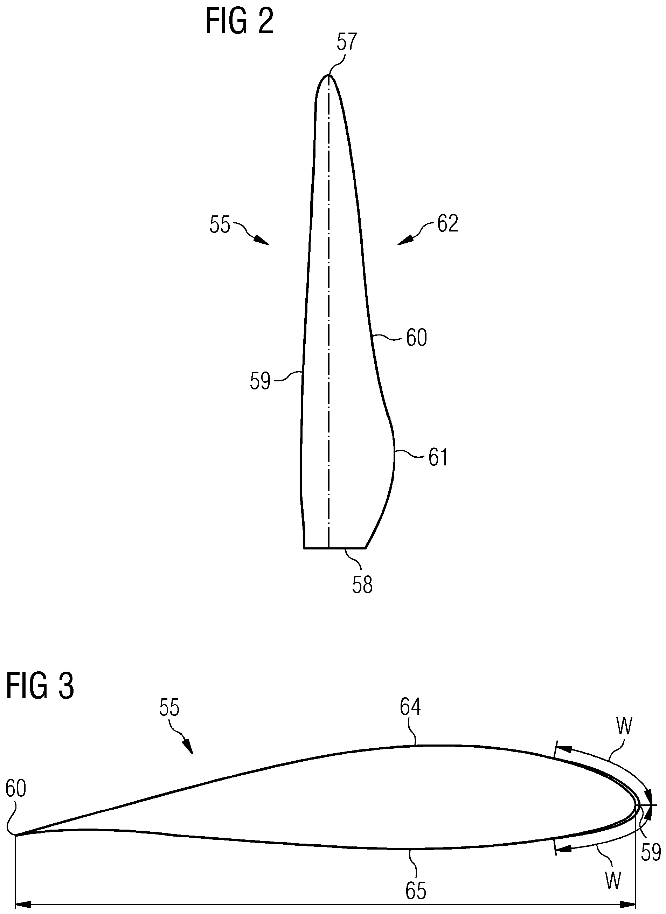

Fig. 2 shows a plan view of a wind turbine rotor blade (55) comprising a tip (57) and a root (58), a leading edge (59) and a trailing edge (60). The rotor blade (55) further comprises a shoulder (61) near the blade root (58) and an airfoil portion (62).

Fig. 3 shows the profile of a wind turbine rotor blade (55) including a leading edge (59), a trailing edge (60) as well as the suction and the pressure sides (65, 64) between the leading and the trailing edges (59, 60). The profile shown in Fig. 3 further comprises a protective cover system (10) according to the present invention which is positioned along the leading edge (59) of the rotor blade (55).

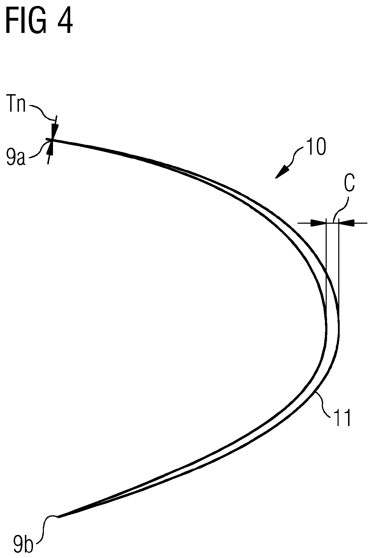

Fig. 4 The protective cover system (10) for protecting a leading edge (59) of a wind turbine blade (55) from erosion comprises a first protective cover (1) and a second protective cover (2). The first and the second protective covers (1, 2) comprise a polymer material. The covers (1, 2) are pre-formed into a curved shape so as to accommodate at least a part of a wind turbine blade (55), especially along the leading edge (59) of the blade (55).

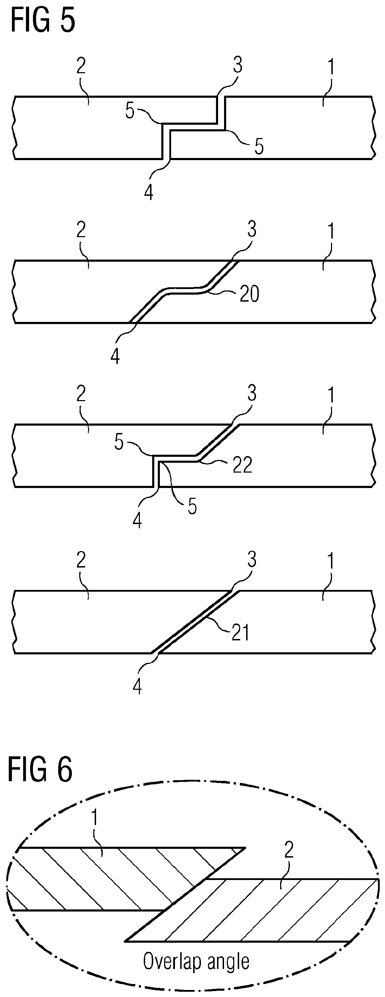

Fig. 5 Each of the first and second protective covers (1, 2) has a tip end (3) and a root end (4). The first protective cover (1) comprises a first overlap portion (4a) at the root end (4) and the second protective cover (2) comprises a second overlap portion (3a) at the tip end (3a). The shape of the first overlap portion (4a) at the root end (4) of the first protective cover (1) is substantially complementary to the shape of the second overlap portion (3a) at the tip end (3) of the second protective cover (2) such that when overlapping these first and second overlap portions (4a, 3a), the resulting cross section of the overlapped overlap portions (4a, 3a) substantially correspond to the cross sections of at least one of the first and second protective covers outside the overlap portions.

The wind turbine blade comprises a protective cover system according to the invention, wherein the protective cover system is connected to the wind turbine blade along a leading edge of this blade.

The method for mounting a protective system to a leading edge 59 of a wind turbine rotor blade 55 from erosion, the method comprises the steps of:
- Providing a wind turbine blade, a first and a second protective covers according to the invention, and an adhesive;
- Applying the adhesive on the wind turbine blade and/or on an inner surface of the first and second protective covers;
- Placing the first protective cover onto the wind turbine blade;
- Placing the second protective cover onto the wind turbine blade, wherein the step of placing the second protective cover onto the wind turbine blade involves arranging the first and second overlap portions such that these first and second overlap portions overlap;
- Optionally, applying further adhesive between the first overlap portion and the second overlap portion; and
- Allowing the adhesive to firmly connect the first and second protective covers to the wind turbine blade.

The invention is directed towards having a plastic shell 1, 2 that is bonded to the outer surface of the blade 55, more specific of the leading edge 59. The shell 1, 2 is referred herein to as protective cover 3. It may have a width W of +/-100mm with respect to the leading edge 59 of the wind turbine blade 55, see Fig. 3.

The shell may be made of a polymer comprising polyurethane and a further component. The shell is a curved protective plate in the shape of a parabolic channel. It is designed to be mounted lengthwise along the leading edge of a wind turbine blade. The shell is moulded in a moulding process. The shell is pre-moulded but still pliable enough to provide a tight fit to the turbine blade.

The shell system comprises a first shell and a second shell. Each shell has two short edges, herein also referred to as tip end and root end (3, 4) and two long edges, herein also referred to as outer edges. The long edges are longer than the short edges. The first short edge 4 is located at one end of the parabolic channel, and the second short edge 3 is located at the opposite end of the parabolic channel. The two long edges 9 are perpendicular to the two short edges 3, 4.

The shell has a centerline C running lengthwise along the substantially parabolic channel in parallel to the long edges 9. The thickness Tn of the shell is greatest along the centerline C and gradually diminishes toward the two long edges 9. The thickness Tn may be 3 mm at the centerline C, see Fig. 4

Overlap section: A shell system comprises at least two of above-mentioned shells 1, 2 touching one another at their short edges 3, 4. The shells may be connected to each other or interconnected by various means, e.g. by edge chamfer and guiding nipple 6, see Fig. 5.

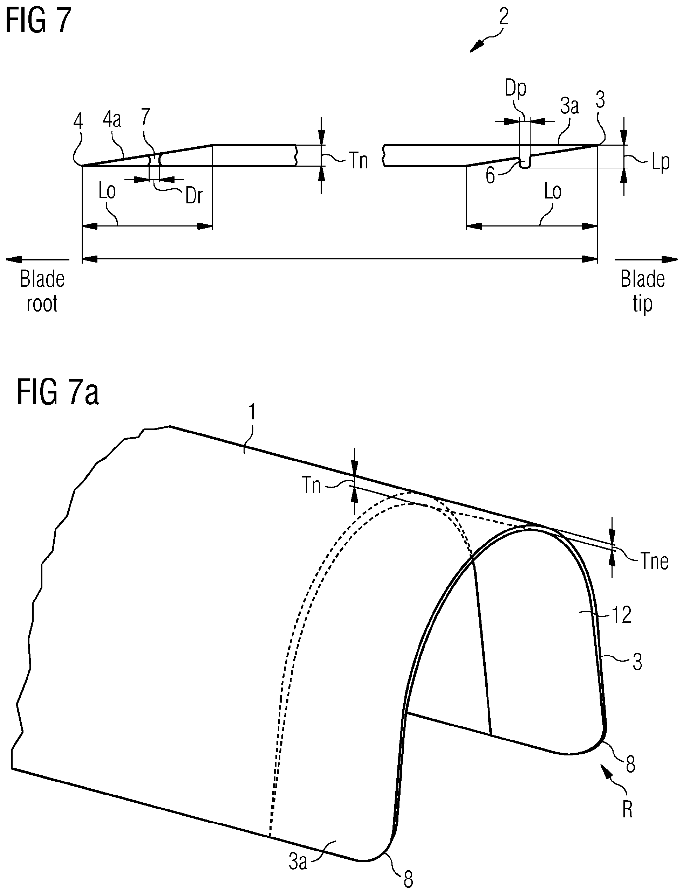

The overlap portions 3a, 4a may have a length Lo of 30mm in longitudinal direction of the protective cover 1, 2. The protrusion 6 may have a diameter Dp of 2mm and the recess 7 may also have diameter Dr of 2mm. The length Lp of the protrusion may be 3mm, see Fig. 7.

The shells may be interconnected by means of connecting elements 5, 20, 21 that serve for a guiding/connecting of the two shells 1, 2. Mechanical Interlocking between the shells 1, 2 is achieved by having connecting elements 5, 20, 21 that have a nipple shape. This shape reduces stress concentration for the connecting element 5, 20, 21.

Transition consideration: Camfered interna - no exposure for the blade. Stepwise decline transition - provide thickness and strength which prolong the lifetime.

Different decline transitions at different positions of the leading edge are possible, e.g. step-like connecting elements 5 at the leading edge (that means at the Centerline C) of the shell 1, 2), step-like connecting elements 20 having rounded edges onto a width of the shell of +/- 50mm from the Leading edge (Centerline C) and tapered connecting elements 21 from +/- 50mm on to a width of +/- 100 m (that means until the outer edges 9, 9a, 9b), see Fig. 5 and Fig. 6.

The blade chord length is decisive of the aero dynamic property - therefore it needs to be as thin as possible. The thickness Tne at an end 4 of the shell may be around 0,05 mm. Corner rounding of corner 8 with a radius R5 help avoiding peeling off of the shell, see Fig. 7a
At an end 3, 4 in lengthwise direction of the shell, the overlap area 3a, 4a may have a length of 20-40 mm, preferably 30 mm. The thickness of the shell may diminish in the overlap area to a very small thickness in the range of 0,03 mm to 0,07 mm, preferably to about 0,05 mm.

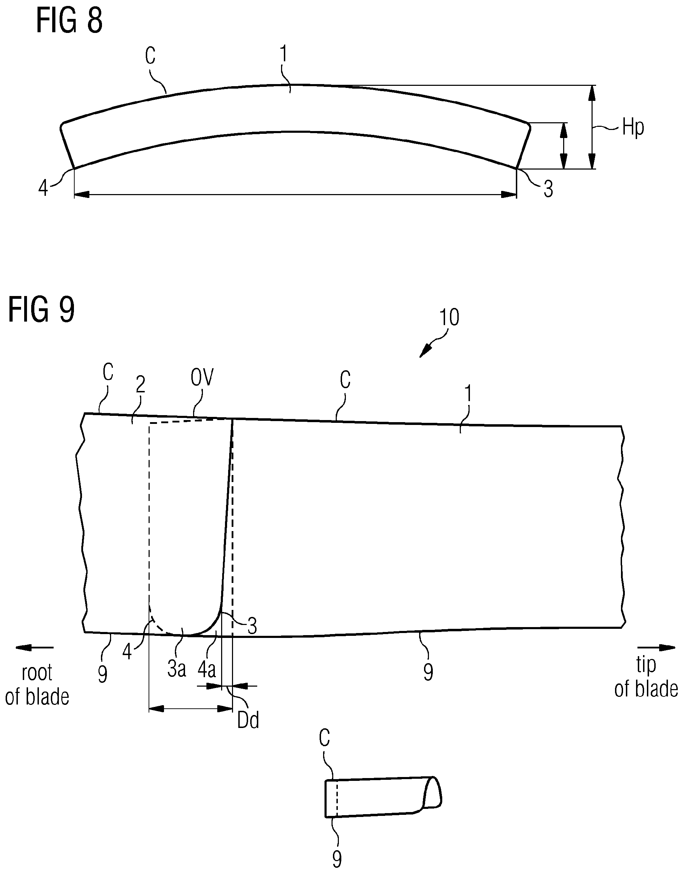

The shell may have a peel height Hp, referred to in Danish language as Peelhejde (in English language Sagitta height). That means the shell 1, 2 may be curved with a radius R2, that means the centerline C is curved. see Fig. 8.

It is from other technology to extrude plastic elements. This invention is directed towards overcoming the disadvantage of having an extrude element.

Having a sagitta height Hp enables the shells to be drapable. The height difference between an outer end of the shell and a position at the centerline in the middle of the shell may be 3 to 7 mm, preferably about 5mm.

The sagitta height Hp is achieved during the manufacturing of the shell. Each of the shells will be moulded as one piece. Another advantage of casting the shells is that each shell can be tailored.

The protective cover system 10 comprising a first and a second protective cover 1, 2 (first and second shell) may have an open angle at the Overlap OV. That means the angle between centerline C and root or tip end 3, 4 is smaller than 90 degrees and the angle between outer edge 9 and root or tip end 3, 4 is greater than 90 degrees. At the outer edge 9 the distance Dd may be 3 mm, see Fig. 9.

Each overlap influences the aerodynamic performance of the blade. It is import to avoid excess overlap and thereby material. Therefore the overlap is less than 30 mm.

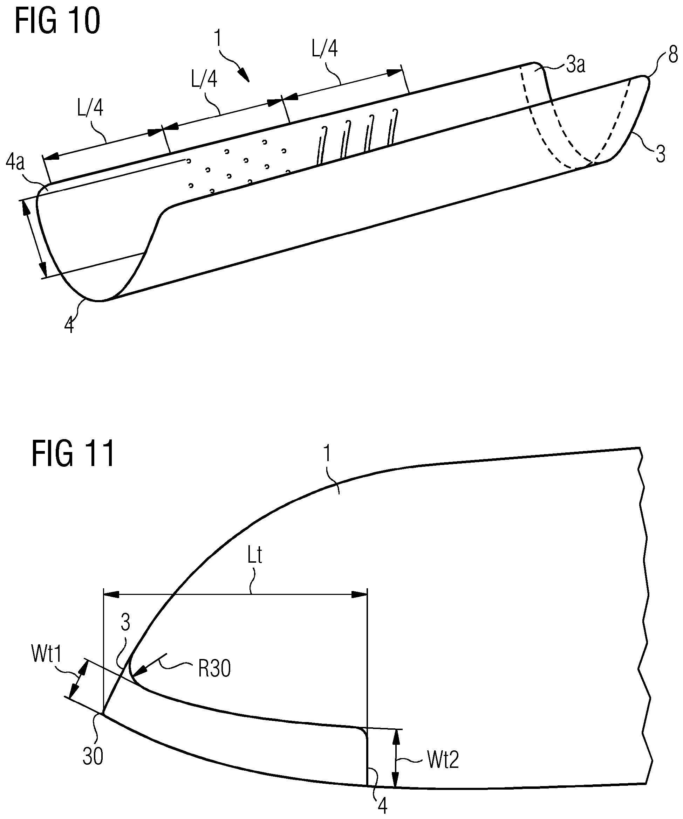

Bondline Features: Indentation, e.g with 20 mm spacing inbetween the indentations, on the inner surface ensure a better bonding due to the fact that the indentation entrap glue, see Fig. 10

A tailored tip as shown in Fig. 11 may have a length Lt in the range of around 530 mm to 630 mm, a width Wt1 of around 50 mm at the tip end 3 of the shell 1 and a width Wt1 of around 100 mm at the root end 4 of the shell 1. In addition, at the tip end 3 of the shell 1 Wt1 may be slightly greater such that a Radius R30 is generated at the outer edge of the shell. So, the tip of the blade is very good enclosed and thus protected from erosion, see Fig. 11 showing a tip shell (soft tip shell)

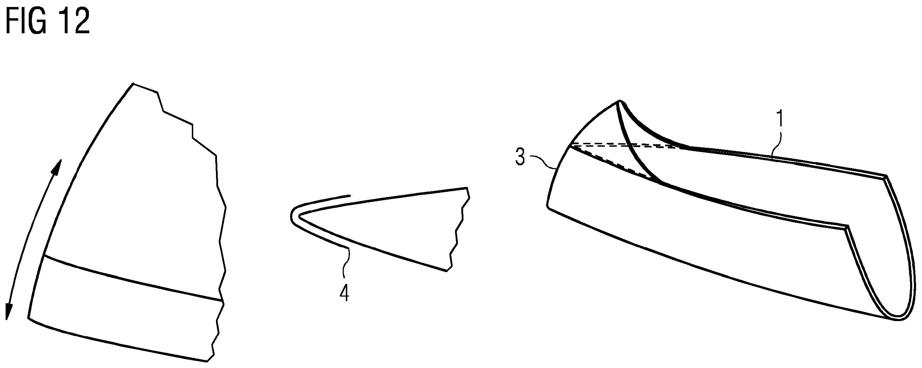

Enclosing the tip of the blade is an option, as also shown in Fig. 12. Better transition of the tip. One unique shell could be used for the tip end.

As an alternative, the tip shell 1, may be designed to leave the tip of the blade 30 blank, that means not covered, see Fig. 12.

### Advantages

- Compared to coating and tape solutions this invention offers a method that can be done in one working step
- Having a peel height enables the shells to be drapable. The peel height is achieved during the manufacturing of the shell. Each shell will be moulded as one piece.
- Another advantage of casting the shells is that each shell can be tailored
- Cost and repair reduced

## Claims

1. Protective cover system (10) for protecting a leading edge (59) of a wind turbine rotor blade (55) from erosion,
the system (10) comprising a first protective cover (1) and a second protective cover (2), both comprise a polymer and being pre-formed into a curved shape so as to accommodate at least a part of a wind turbine rotor blade (55) to be protected,
each of the first and second protective covers (1, 2) has a tip end (3) and a root end (4),
wherein the first protective cover (1) comprises a first overlap portion (4a) at the root end (4), and
the second protective cover (2) comprises a second overlap portion (3a) at the tip end (3),
wherein the shape of the first overlap portion (4a) is substantially complementary to the shape of the second overlap portion (3a) such that when overlapping the first and second overlap portions (4a, 3a), the resulting cross section of the overlapped overlap portions (4a, 3a) substantially corresponds to the cross sections of at least one of the first and second protective covers (1, 2) outside the overlap portions (4a, 3a), and
wherein the first and second protective covers (1, 2) are pre-formed into a curved shape in a lateral direction and extend from their tip end (3) to their root end (4) in a longitudinal direction,
**characterised in that**
the first and second protective covers (1, 2) have a centerline (C) running in the longitudinal direction, and this centerline is curved such that the first and second protective covers (1, 2) have a sagitta height (Hp).

2. The protective cover system (10) according to claim 1,
wherein the first overlap portion (4a) tapers at least partly towards the root end (4) of the first protective cover (1), and
the second overlap portion (2) tapers at least partly towards the tip end (3) of the second protective cover (2).

3. The protective cover system (10) according to claim 1 or claim 2,
wherein each of the first overlap portion (1) and the second overlap portion (2) comprises at least one step (5).

4. The protective cover system according to claim 3,
wherein the step (5) is at least partly rounded.

5. The protective cover system (10) according to one of claims 1-4,
wherein one of the first and second protective covers (1, 2) comprises a protruding element (6) in the respective first or second overlap portion (4a, 3a), and
wherein the other one of the first and second protective covers (1, 2) comprises a recess (7) in the other respective first or second overlap portion (4a, 3a),
wherein the recess (7) is arranged to accommodate the protruding element (6).

6. The protective cover system (10) according to claim 5, wherein the recess (7) is a hole and the protruding element (6) is nipple-shaped.

7. The protective cover system (10) according to one of the preceding claims,
wherein at least one of the protective covers (1, 2) comprise an Elastomer, e.g. comprising Polyurethane or Polyethylene, preferably a Polyurethane based Elastomer.

8. The protective cover system (10) according to one of the preceding claims,
wherein each of the first and second protective covers (1, 2) comprises four corners (8), wherein at least one of these corners (8) is rounded.

9. The protective cover system (10) according to one of the preceding claims,
wherein the first and second protective covers (1, 2) are pre-formed into a curved shape in a lateral direction and extend from their tip end (3) to their root end (4) in a longitudinal direction,
wherein each of the first and second protective covers (1, 2) has a centerline (C) running in the longitudinal direction, and
a first outer edge (9a) and a second outer edge (9b), both running in parallel to the centerline (C),
wherein the first and second protective covers (1, 2) have a thickness along their centerline (C),
wherein the thickness tapers off towards the respective first and second outer edges (9a, 9b).

10. The protective cover system (10) according to one of the preceding claims,
wherein the first and second protective covers (1, 2) are pre-formed into a curved shape in a lateral direction and extend from their tip end (3) to their root end (4) in a longitudinal direction,
wherein at least one of the first and second protective covers (1, 2) is curved in the longitudinal direction and/or tapers in the longitudinal direction, preferably towards its tip end (3).

11. The protective cover system (10) according to one of the preceding claims,
wherein a length of at least one of the first and second protective cover (1, 2) amounts to about 2000 mm at maximum, preferably to about 1000 mm.

12. The protective cover system (1, 2) according to one of the preceding claims,
wherein at least one of the first and second protective cover (1, 2) comprises a printed centerline (C) on its outer surface (11) to facilitate the mounting onto a leading edge (59) of a wind turbine blade (55).

13. Wind turbine blade (55) comprising a protective cover system (10) according to one of the preceding claims, wherein the protective cover system (10) is connected to the wind turbine blade (55) along a leading edge (59) of the blade (55).

14. Method for mounting a protective system to a leading edge (59) of a wind turbine rotor blade (55) for protecting the leading edge of the wind turbine rotor blade from erosion, the method comprises the steps of:
- Providing a wind turbine blade, a first and a second protective covers according to one of claims 1-12, and an adhesive;
- Applying the adhesive on the wind turbine blade and/or on an inner surface of the first and second protective covers;
- Placing the first protective cover onto the wind turbine blade;
- Placing the second protective cover onto the wind turbine blade, wherein the step placing the second protective cover onto the wind turbine blade involves arranging the first and second overlap portions such that these first and second overlap portions overlap;
- Optionally, applying further adhesive between the first overlap portion and the second overlap portion; and
- Allowing the adhesive to firmly connect the first and second protective covers to the wind turbine blade.

## Patentansprüche

1. Schutzabdeckungssystem (10) zum Schützen einer Vorderkante (59) eines Windturbinenrotorblatts (55) vor Erosion,
wobei das System (10) eine erste Schutzabdeckung (1) und eine zweite Schutzabdeckung (2) umfasst, die beide ein Polymer umfassen und in einer gekrümmten Form vorgeformt sind, um mindestens einen Teil eines zu schützenden Windturbinenrotorblatts (55) aufzunehmen,
wobei jede der ersten und der zweiten Schutzabdeckung (1, 2) ein Spitzenende (3) und ein Fußende (4) aufweist,
wobei die erste Schutzabdeckung (1) einen ersten Überlappungsabschnitt (4a) an dem Fußende (4) umfasst und wobei die zweite Schutzabdeckung (2) einen zweiten Überlappungsabschnitt (3a) an dem Spitzenende (3) umfasst, wobei die Form des ersten Überlappungsabschnitts (4a) im Wesentlichen komplementär zu der Form des zweiten Überlappungsabschnitts (3a) ist, sodass bei Überlappen des ersten und des zweiten Überlappungsabschnitts (4a, 3a) der resultierende Querschnitt der überlappten Überlappungsabschnitte (4a, 3a) im Wesentlichen den Querschnitten von mindestens einer der ersten und der zweiten Schutzabdeckung (1, 2) außerhalb der Überlappungsabschnitte (4a, 3a) entspricht, und
wobei die erste und die zweite Schutzabdeckung (1, 2) in einer lateralen Richtung in einer gekrümmten Form vorgeformt sind und sich von ihrem Spitzenende (3) zu ihrem Fußende (4) in einer Längsrichtung erstrecken,
**dadurch gekennzeichnet, dass**
die erste und die zweite Schutzabdeckung (1, 2) eine Mittellinie (C) aufweisen, die in der Längsrichtung verläuft, und diese Mittellinie derart gekrümmt ist, dass die erste und die zweite Schutzabdeckung (1, 2) eine Sagittahöhe (Hp) aufweisen.

2. Schutzabdeckungssystem (10) nach Anspruch 1, wobei sich der erste Überlappungsabschnitt (4a) mindestens teilweise zu dem Fußende (4) der ersten Schutzabdeckung (1) hin verjüngt und wobei sich der zweite Überlappungsabschnitt (2) mindestens teilweise zu dem Spitzenende (3) der zweiten Schutzabdeckung (2) hin verjüngt.

3. Schutzabdeckungssystem (10) nach Anspruch 1 oder Anspruch 2,
wobei jeder des ersten Überlappungsabschnitts (1) und des zweiten Überlappungsabschnitts (2) mindestens eine Stufe (5) umfasst.

4. Schutzabdeckungssystem nach Anspruch 3, wobei die Stufe (5) mindestens teilweise abgerundet ist.

5. Schutzabdeckungssystem (10) nach einem der Ansprüche 1-4, wobei eine der ersten und der zweiten Schutzabdeckung (1, 2) ein hervorstehendes Element (6) in dem jeweiligen ersten oder zweiten Überlappungsabschnitt (4a, 3a) umfasst und
wobei die andere der ersten und der zweiten Schutzabdeckung (1, 2) eine Aussparung (7) in dem anderen jeweiligen ersten oder zweiten Überlappungsabschnitt (4a, 3a) umfasst,
wobei die Aussparung (7) dazu ausgelegt ist, das hervorstehende Element (6) aufzunehmen.

6. Schutzabdeckungssystem (10) nach Anspruch 5, wobei die Aussparung (7) ein Loch ist und das hervorstehende Element (6) nippelförmig ist.

7. Schutzabdeckungssystem (10) nach einem der vorhergehenden Ansprüche,
wobei mindestens eine der Schutzabdeckungen (1, 2) ein Elastomer, das z. B. Polyurethan oder Polyethylen umfasst, vorzugsweise ein Polyurethan-basiertes Elastomer, umfasst.

8. Schutzabdeckungssystem (10) nach einem der vorhergehenden Ansprüche,
wobei jede der ersten und der zweiten Schutzabdeckung (1, 2) vier Ecken (8) umfasst, wobei mindestens eine dieser Ecken (8) abgerundet ist.

9. Schutzabdeckungssystem (10) nach einem der vorhergehenden Ansprüche,
wobei die erste und die zweite Schutzabdeckung (1, 2) in einer lateralen Richtung in einer gekrümmten Form vorgeformt sind und sich von ihrem Spitzenende (3) zu ihrem Fußende (4) in einer Längsrichtung erstrecken,
wobei jede der ersten und der zweiten Schutzabdeckung (1, 2) eine Mittellinie (C), die in der Längsrichtung verläuft, und eine erste Außenkante (9a) und eine zweite Außenkante (9b), die beide parallel zu der Mittellinie (C) verlaufen, aufweist, wobei die erste und die zweite Schutzabdeckung (1, 2) eine Dicke entlang ihrer Mittellinie (C) aufweisen,
wobei sich die Dicke zu der jeweiligen ersten und zweiten Außenkante (9a, 9b) hin verjüngt.

10. Schutzabdeckungssystem (10) nach einem der vorhergehenden Ansprüche,
wobei die erste und die zweite Schutzabdeckung (1, 2) in einer lateralen Richtung in einer gekrümmten Form vorgeformt sind und sich von ihrem Spitzenende (3) zu ihrem Fußende (4) in einer Längsrichtung erstrecken,
wobei mindestens eine der ersten und der zweiten Schutzabdeckung (1, 2) in der Längsrichtung gekrümmt ist und/oder sich in der Längsrichtung verjüngt, vorzugsweise zu ihrem Spitzenende (3) hin.

11. Schutzabdeckungssystem (10) nach einem der vorhergehenden Ansprüche,
wobei eine Länge von mindestens einer der ersten und der zweiten Schutzabdeckung (1, 2) höchstens etwa 2000 mm, vorzugsweise etwa 1000 mm, beträgt.

12. Schutzabdeckungssystem (1, 2) nach einem der vorhergehenden Ansprüche,
wobei mindestens eine der ersten und der zweiten Schutzabdeckung (1, 2) eine gedruckte Mittellinie (C) auf ihrer Außenfläche (11) umfasst, um das Montieren an einer Vorderkante (59) eines Windturbinenblatts (55) zu erleichtern.

13. Windturbinenblatt (55), umfassend ein Schutzabdeckungssystem (10) nach einem der vorhergehenden Ansprüche,
wobei das Schutzabdeckungssystem (10) entlang einer Vorderkante (59) des Blatts (55) mit dem Windturbinenblatt (55) verbunden ist.

14. Verfahren zum Montieren eines Schutzsystems an einer Vorderkante (59) eines Windturbinenrotorblatts (55) zum Schützen der Vorderkante des Windturbinenrotorblatts vor Erosion, wobei das Verfahren die folgenden Schritte umfasst:
- Bereitstellen eines Windturbinenblatts, einer ersten und einer zweiten Schutzabdeckung nach einem der Ansprüche 1-12 und eines Klebstoffs;
- Auftragen des Klebstoffs auf das Windturbinenblatt und/oder auf eine Innenfläche der ersten und der zweiten Schutzabdeckung;
- Platzieren der ersten Schutzabdeckung auf das Windturbinenblatt;
- Platzieren der zweiten Schutzabdeckung auf das Windturbinenblatt, wobei der Schritt des Platzierens der zweiten Schutzabdeckung auf das Windturbinenblatt Anordnen des ersten und des zweiten Überlappungsabschnitts derart beinhaltet, dass sich dieser erste und zweite Überlappungsabschnitt überlappen;
- optional Auftragen von mehr Klebstoff zwischen dem ersten Überlappungsabschnitt und dem zweiten Überlappungsabschnitt; und
- Erlauben, dass der Klebstoff die erste und die zweite Schutzabdeckung fest mit dem Windturbinenblatt verbindet.

## Revendications

1. Système de couverture protectrice (10) pour la protection d'un bord d'attaque (59) d'une pale de rotor d'éolienne (55) de l'érosion,
le système (10) comprenant une première couverture protectrice (1) et une seconde couverture protectrice (2), toutes deux comprenant un polymère et étant préformées en une forme courbée de façon à recevoir au moins une partie d'une pale de rotor d'éolienne (55) qui doit être protégée,
chacune des première et seconde couvertures protectrices (1, 2) a une extrémité de pointe (3) et une extrémité de pied (4), dans lequel la première couverture protectrice (1) comprend une première portion de chevauchement (4a) à l'extrémité de pied (4), et
la seconde couverture protectrice (2) comprend une seconde portion de chevauchement (3a) à l'extrémité de pointe (3), dans lequel la forme de la première portion de chevauchement (4a) est sensiblement complémentaire à la forme de la seconde portion de chevauchement (3a) de sorte que lors du chevauchement des première et seconde portions de chevauchement (4a, 3a), la coupe transversale résultante des portions de chevauchement qui se chevauchent (4a, 3a) correspond sensiblement aux coupes transversales d'au moins l'une des première et seconde couvertures protectrices (1, 2) à l'extérieur des portions de chevauchement (4a, 3a), et
dans lequel les première et seconde couvertures protectrices (1, 2) sont préformées en une forme courbée dans une direction latérale et s'étendent de leur extrémité de pointe (3) à leur extrémité de pied (4) dans une direction longitudinale, **caractérisé en ce que**
les première et seconde couvertures protectrices (1, 2) ont une ligne centrale (C) s'étendant dans la direction longitudinale, et cette ligne centrale est courbée de sorte que les première et seconde couvertures protectrices (1, 2) ont une hauteur de flèche (Hp).

2. Système de couverture protectrice (10) selon la revendication 1, dans lequel la première portion de chevauchement (4a) s'effile au moins partiellement vers l'extrémité de pied (4) de la première couverture protectrice (1), et
la seconde portion de chevauchement (2) s'effile au moins partiellement vers l'extrémité de pointe (3) de la seconde couverture protectrice (2).

3. Système de couverture protectrice (10) selon la revendication 1 ou la revendication 2,
dans lequel chacune de la première portion de chevauchement (1) et de la seconde portion de chevauchement (2) comprend au moins une marche (5).

4. Système de couverture protectrice selon la revendication 3, dans lequel la marche (5) est au moins partiellement arrondie.

5. Système de couverture protectrice (10) selon l'une des revendications 1 à 4,
dans lequel l'une des première et seconde couvertures protectrices (1, 2) comprend un élément faisant saillie (6) dans la première ou seconde portion de chevauchement (4a, 3a) respective, et
dans lequel l'autre des première et seconde couvertures protectrices (1, 2) comprend un évidemment (7) dans l'autre première ou seconde portion de chevauchement (4a, 3a) respective,
dans lequel l'évidemment (7) est agencé pour la réception de l'élément faisant saillie (6).

6. Système de couverture protectrice (10) selon la revendication 5, dans lequel l'évidemment (7) est un trou et l'élément faisant saillie (6) est en forme de mamelon.

7. Système de couverture protectrice (10) selon l'une des revendications précédentes,
dans lequel au moins l'une des couvertures protectrices (1, 2) comprend un élastomère, par exemple comprenant du polyuréthane ou du polyéthylène, de préférence un élastomère à base de polyuréthane.

8. Système de couverture protectrice (10) selon l'une des revendications précédentes,
dans lequel chacune des première et seconde couvertures protectrices (1, 2) comprend quatre coins (8), dans lequel au moins l'un de ces coins (8) est arrondi.

9. Système de couverture protectrice (10) selon l'une des revendications précédentes,
dans lequel les première et seconde couvertures protectrices (1, 2) sont préformées en une forme courbée dans une direction latérale et s'étendent de leur extrémité de pointe (3) à leur extrémité de pied (4) dans une direction longitudinale,
dans lequel chacune des première et seconde couvertures protectrices (1, 2) a une ligne centrale (C) s'étendant dans la direction longitudinale, et
un premier bord externe (9a) et un second bord externe (9b), s'étendant tous deux de manière parallèle à la ligne centrale (C),
dans lequel les première et seconde couvertures protectrices (1, 2) ont une épaisseur le long de leur ligne centrale (C),
dans lequel l'épaisseur s'effile vers les premier et second bords externes (9a, 9b) respectifs.

10. Système de couverture protectrice (10) selon l'une des revendications précédentes,
dans lequel les première et seconde couvertures protectrices (1, 2) sont préformées en une forme courbée dans une direction latérale et s'étendent de leur extrémité de pointe (3) à leur extrémité de pied (4) dans une direction longitudinale,
dans lequel au moins l'une des première et seconde couvertures protectrices (1, 2) est courbée dans la direction longitudinale et/ou s'effile dans la direction longitudinale, de préférence vers son extrémité de pointe (3).

11. Système de couverture protectrice (10) selon l'une des revendications précédentes,
dans lequel une longueur d'au moins une de la première et de la seconde couverture protectrice (1, 2) s'élève à environ 2000 mm au maximum, de préférence à environ 1000 mm.

12. Système de couverture protectrice (1, 2) selon l'une des revendications précédentes,
dans lequel au moins une de la première et de la seconde couverture protectrice (1, 2) comprend une ligne centrale (C) imprimée sur sa surface externe (11) pour faciliter le montage sur un bord d'attaque (59) d'une pale d'éolienne (55).

13. Pale d'éolienne (55) comprenant un système de couverture protectrice (10) selon une des revendications précédentes, dans laquelle le système de couverture protectrice (10) est raccordé à la pale d'éolienne (55) le long d'un bord d'attaque (59) de la pale (55).

14. Procédé pour le montage d'un système de protection sur un bord d'attaque (59) d'une pale de rotor d'éolienne (55) pour la protection du bord d'attaque de la pale de rotor d'éolienne de l'érosion, le procédé comprend les étapes consistant à :
- la fourniture d'une pale d'éolienne, d'une première et d'une seconde couverture protectrice selon l'une des revendications 1 à 12, et d'un adhésif ;
- l'application de l'adhésif sur la pale d'éolienne et/ou sur une surface interne des première et seconde couvertures protectrices ;
- le placement de la première couverture protectrice sur la pale d'éolienne ;
- le placement de la seconde couverture protectrice sur la pale d'éolienne, dans lequel l'étape consistant à placer la seconde couverture protectrice sur la pale d'éolienne implique l'agencement des première et seconde portions de chevauchement de telle sorte que ces première et seconde portions de chevauchement se chevauchent ;
- éventuellement, l'application d'un adhésif supplémentaire entre la première portion de chevauchement et la seconde portion de chevauchement ; et
- le fait de permettre à l'adhésif de raccorder fermement les première et seconde couvertures protectrices à la pale d'éolienne.
